(19) Europäisches Patentamt
European Patent Office
Office européen des brevets

(11) **EP 2 124 092 A1**

(12) **EUROPEAN PATENT APPLICATION**
published in accordance with Art. 153(4) EPC

(43) Date of publication:
**25.11.2009 Bulletin 2009/48**

(51) Int Cl.:
**G02F 1/133** (2006.01)  **G02F 1/141** (2006.01)

(21) Application number: **08711230.6**

(22) Date of filing: **06.02.2008**

(86) International application number:
**PCT/JP2008/052384**

(87) International publication number:
**WO 2008/096896 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.02.2007 JP 2007028182**

(71) Applicant: **Nano Loa, Inc.**
**Kawasaki-shi,**
**Kanagawa 213012 (JP)**

(72) Inventor: **IKEDA, Hajime**
**Kawasaki-shi**
**Kanagawa 214-0021 (JP)**

(74) Representative: **Becker Kurig Straus**
**Patentanwälte**
**Bavariastrasse 7**
**80336 München (DE)**

(54) **LIQUID CRYSTAL DEVICE**

(57) A liquid crystal device, comprising, at least, a pair of polarizing elements being disposed so that the transmission axes thereof are perpendicular to each other; a liquid crystal element disposed between the pair of polarizing elements; and voltage applying means for applying a voltage to the liquid crystal element. The liquid crystal element is such that it enables high-speed optical response, and the optical axis azimuth thereof is rotatable in response to the strength and/or direction of an electric field to be applied thereto. The voltage applying means is capable of controlling a voltage to be applied from the voltage applying means to the liquid crystal element, in response to the liquid crystal molecular alignment in the liquid crystal material. There is provided a liquid crystal device having a temperature-compensating function so as to achieve a good light-dark ratio.

# Fig.11

**Description**

TECHNICAL FIELD

The present invention relates to a liquid crystal device having a reduced temperature dependency, which is suitably usable for various display devices and the like including an optical shutter device and a display.

BACKGROUND ART

In recent years, combined with the progress in technology aiming at a so-called "ubiquitous society", various needs for the display technique in general, such as high-speed response, downsizing and high display quality, are sophisticated. In order to meet these needs, also in the field of visual display and depiction, the display image processing technique such as three-dimensional display, selective invisibility and light control is rapidly advancing and becoming speeded-up and complicated. On the other hand, improvement of the environment related to information transfer including optical communication using an optical fiber cable or the like is promoted, and attempts are being made to realize large-volume high-speed data or information transfer.

In general, in various fields including the field of visual display and depiction, various mechanical/electrical devices have been heretofore used as the mechanical switch or shutter mechanism for turning ON/OFF the light. Out of these devices, a chopper comprising a motor and a rotating plate having formed therein a slit, and a mechanical shutter using a piezoelectric (or electrostrictive) element as the actuator have a simple structure and therefore, are being generally used.

However, a tendency of attaching importance particularly to the properties suitable for use in the so-called ubiquitous society has recently intensified and to cope with this trend, as for the switch/shutter mechanism, a device utilizing an electro-optical effect of, for example, a crystal or a liquid crystal and being excellent in terms of downsizing, electric power saving, noise reduction and the like has come into use.

Furthermore, the above-described device having a conventional mechanical mechanism is subject to wear in its rocking portion to some degree or another, and the reliability of the mechanical device inevitably tends to decrease. Above all, in an application where the device is used at such a high speed level as clicking the shutter several tens of times or more for 1 second, the rocking portion is worn to a significant extent. Of course, fairly severe vibration or noise is generated from the worn portion or the actuator portion such as motor or piezoelectric/electrostrictive element.

In addition to these problems, in view of downsizing, electric power saving and the like described above, the trend toward the use of a device utilizing the electro-optical effect of, for example, a crystal or a liquid crystal is particularly intensifying in recent years.

However, these electro-optical devices are not free of a problem. For example, in the case of a PLZT (lead lanthanum-added zirconate titanate) crystal having an electro-optical effect, a driving voltage of several hundreds of V is necessary for obtaining a sufficiently high transmittance and depending on the electrode structure of the optical shutter, breakdown may occur due to the high voltage. Also, by the nature as a crystal, this device has a strong tendency that growth in size is difficult, as compared with a liquid crystal enabling production of a large-screen display of even 100 inches.

Also, in the case of a device using a TN liquid crystal, the driving voltage for operation may be a low voltage of several V, but the response speed is as low as approximately several tens of ms and although the "rising up" may be improved by applying a high voltage, the "rising down" is not improved, making the high-speed operation to still remain difficult. In the light of high-speed response and low voltage, use of a ferroelectric liquid crystal may be considered, but the ferroelectric liquid crystal has spontaneous polarization and its driving disadvantageously requires a large amount of current compared with TN liquid crystal and the like. In addition, the site of extinction position in a ferroelectric liquid crystal varies depending on the temperature, and a mechanism to compensate for this change of extinction position becomes necessary.

As the method for such temperature compensation, various devices in accordance with the stable position "slipped" from the original position due to the ambient temperature are required, and the construction of the liquid crystal device or optical shutter inevitably becomes complicated. Known examples of the device or method used for adjustment to the stable position include a mechanical method of adjusting the position of a polarizing device or surface-stabilized ferroelectric liquid crystal display device (see, JP-A (Japanese Unexamined Patent Publication) No. 62-204229), a method of inserting a surface-stabilized ferroelectric liquid crystal device and a liquid crystal device having the same temperature dependency between polarizing devices, thereby canceling the temperature dependency (see, JP-A No. 4-186230), and a method of, instead of the above-described liquid crystal device having the same temperature dependency, inserting a compensation device that performs positioning or the like of the optical axis azimuth of a 1/2 wavelength plate in accordance with the temperature dependency of the surface-stabilized ferroelectric liquid crystal device (see, JP-A No. 4-186224).

[Patent Document 1] JP-A No. 62-204229
[Patent Document 2] JP-A No. 4-186230
[Patent Document 3] JP-A No. 4-186224

DISCLOSURE OF THE INVENTION

An object of the present invention is to provide a liquid crystal device (for example, having an optical shutter function) capable of solving the problem encountered in the prior art.

Another object of the present invention is to provide a liquid crystal device having a temperature compensation function capable of achieving a good light/dark ratio condition.

A further object of the present invention is to provide a liquid crystal device having a good temperature compensation function substantially over the entire operation temperature range.

As a result of intensive studies, the present inventors have found that it is very effective for achieving the above-described object to use a liquid crystal element capable of rotating the optical axis azimuth in response to the strength and/or direction of an electric field to be applied thereto (for example, a polarization shielding-type smectic liquid crystal (hereinafter referred to as "PSS-LCD")) and constitute a liquid crystal device by combining the liquid crystal element with a polarizing element and voltage applying means.

The liquid crystal device according to the present invention is based on the above-mentioned discovery. More specifically, such a liquid crystal device comprises, at least:

a pair of polarizing elements being disposed so that the transmission axes thereof are perpendicular to each other,
a liquid crystal element disposed between the pair of polarizing elements, and
voltage applying means for applying a voltage to the liquid crystal element,
wherein the liquid crystal element comprises, at least, a pair of substrates and a liquid crystal material disposed between the pair of substrates; the optical axis azimuth of the liquid crystal element being rotatable in response to the strength and/or direction of an electric field to be applied thereto; and
the voltage applying means is capable of controlling a voltage to be applied from the voltage applying means to the liquid crystal element, in response to the liquid crystal molecular alignment in the liquid crystal material.

The present invention also provides a liquid crystal device comprising, at least:

a pair of polarizing elements being disposed so that the transmission axes thereof are crossed with each other,
a liquid crystal element disposed between the pair of polarizing elements, and
angle adjusting means for adjusting the angle between the liquid crystal element and the polarizing element,
wherein the liquid crystal element comprises, at least, a pair of substrates and a liquid crystal material disposed between the pair of substrates, the optical axis azimuth of the liquid crystal element being rotatable in response to the strength and/or direction of an electric field to be applied thereto; and
the angle adjusting means is capable of controlling the angle between the liquid crystal element and the polarizing element in response to the liquid crystal molecular alignment in the liquid crystal material.

The present invention further provides aliquid crystal device comprising, at least:

a pair of polarizing elements being disposed so that the transmission axes thereof are perpendicular to each other,
a liquid crystal element disposed between the pair of polarizing elements, and
voltage applying means for applying a voltage to the liquid crystal element,
wherein the liquid crystal element comprises, at least, a pair of substrates and a liquid crystal material disposed between the pair of substrates; the initial molecular alignment in the liquid crystal element having a direction which is parallel or almost parallel to the alignment treatment direction for the liquid crystal material; the liquid crystal material showing almost no spontaneous polarization which is perpendicular to the pair of substrates in the absence of a voltage to be externally applied thereto; and
the voltage applying means is capable of controlling a voltage to be applied from the voltage applying means to the liquid crystal element, in response to the liquid crystal molecular alignment in the liquid crystal material.

The present invention further provides a liquid crystal device, comprising at least:

a pair of polarizing elements being disposed so that the transmission axes thereof are perpendicular to each other,
a liquid crystal element disposed between the pair of polarizing elements, and
angle adjusting means for adjusting the angle between the liquid crystal element and the polarizing element,

wherein the liquid crystal element comprises at least a pair of substrates and a liquid crystal material disposed between the pair of substrates; the initial molecular alignment in the liquid crystal element having a direction which is parallel or almost parallel to the alignment treatment direction for the liquid crystal material; the liquid crystal material showing almost no spontaneous polarization which is perpendicular to the pair of substrates in the absence of a voltage to be externally applied thereto; and
the angle adjusting means is capable of controlling the angle between the liquid crystal element and the polarizing element in response to the liquid crystal molecular alignment in the liquid crystal material.

In the liquid crystal device according to the present invention having the above-mentioned constitution, a liquid crystal element capable of rotating the optical axis azimuth in response to the strength and/or direction of an electric field to be applied thereto can be used without any particular limitation, but a "PSS-LCD" (polarization shielding-type smectic liquid crystal) may preferably be used. In this PSS-LCD, the liquid crystal molecules generally tend to align in the buffing direction. In the present invention, the quantity of light transmitted through the liquid crystal can be controlled, for example, by the electric field intensity.

Generally, in the case of an analog gradation LCD where liquid crystal molecules switch their direction in the same plane parallel to the buffing direction, the transmitted light quantity has temperature dependency. In the present invention, such temperature dependency can be reduced. In the above-described PSS-LCD device (PSS-LCD), liquid crystal molecules move quickly and therefore, such temperature dependency tends to be relatively strong.

In the normal ferroelectric LC that has been conventionally used, alignment of liquid crystal molecules changes only between "two values" (by a voltage exceeding a certain threshold value), whereas in the PSS-LCD, the "tilt angle" of the liquid crystal molecular alignment can be changed in an analog manner. For this reason, in the present invention, PSS-LCD is suitably usable in particular.

In the case of using a liquid crystal element, since the indoor temperature (for example, in a TV station) changes from the outdoor temperature, a so-called "black floating" phenomenon sometimes occurs in the liquid crystal element due to the temperature change. Such a change of black (that corresponds, in the change of the transmitted light quantity, to the "denominator" of a fraction) is known to become visually prominent. Colors other than black (colors corresponding to the "numerator" but not to the "denominator" of a fraction) are known to less affect the image even when the transmitted light quantity is somewhat changed.

The present invention includes, for example, the following embodiments.

[1] A liquid crystal device, comprising at least:

a pair of polarizing elements being disposed so that the transmission axes thereof are perpendicular to each other,
a liquid crystal element disposed between the pair of polarizing elements, and
voltage applying means for applying a voltage to the liquid crystal element,
wherein the liquid crystal element comprises, at least, a pair of substrates and a liquid crystal material disposed between the pair of substrates; the optical axis azimuth of the liquid crystal element being rotatable in response to the strength and/or direction of an electric field to be applied thereto; and
the voltage applying means is capable of controlling a voltage to be applied from the voltage applying means to the liquid crystal element, in response to the liquid crystal molecular alignment in the liquid crystal material.

[2] A liquid crystal device comprising, at least:

a pair of polarizing elements being disposed so that the transmission axes thereof are crossed with each other,
a liquid crystal element disposed between the pair of polarizing elements, and
angle adjusting means for adjusting the angle between the liquid crystal element and the polarizing element,
wherein the liquid crystal element comprises, at least, a pair of substrates and a liquid crystal material disposed between the pair of substrates, the optical axis azimuth of the liquid crystal element being rotatable in response to the strength and/or direction of an electric field to be applied thereto; and
the angle adjusting means is capable of controlling the angle between the liquid crystal element and the polarizing element in response to the liquid crystal molecular alignment in the liquid crystal material.

[3] A liquid crystal device comprising, at least:

a pair of polarizing elements being disposed so that the transmission axes thereof are perpendicular to each other,
a liquid crystal element disposed between the pair of polarizing elements, and
voltage applying means for applying a voltage to the liquid crystal element,
wherein the liquid crystal element comprises, at least, a pair of substrates and a liquid crystal material disposed

4

between the pair of substrates; the initial molecular alignment in the liquid crystal element having a direction which is parallel or almost parallel to the alignment treatment direction for the liquid crystal material; the liquid crystal material showing almost no spontaneous polarization which is perpendicular to the pair of substrates in the absence of a voltage to be externally applied thereto; and

the voltage applying means is capable of controlling a voltage to be applied from the voltage applying means to the liquid crystal element, in response to the liquid crystal molecular alignment in the liquid crystal material.

[4] A liquid crystal device, comprising at least:

a pair of polarizing elements being disposed so that the transmission axes thereof are perpendicular to each other, a liquid crystal element disposed between the pair of polarizing elements, and angle adjusting means for adjusting the angle between the liquid crystal element and the polarizing element, wherein the liquid crystal element comprises at least a pair of substrates and a liquid crystal material disposed between the pair of substrates; the initial molecular alignment in the liquid crystal element having a direction which is parallel or almost parallel to the alignment treatment direction for the liquid crystal material; the liquid crystal material showing almost no spontaneous polarization which is perpendicular to the pair of substrates in the absence of a voltage to be externally applied thereto; and the angle adjusting means is capable of controlling the angle between the liquid crystal element and the polarizing element in response to the liquid crystal molecular alignment in the liquid crystal material.

[5] A liquid crystal device according to [1] or [2], wherein the liquid crystal element is capable of rotating the optical axis azimuth in response to the strength and/or direction of an electric field to be applied thereto at a level of 10 to 2 V/$\mu$m.

[6] A liquid crystal device according to [1], [2] or [5], wherein the liquid crystal element is capable of high-speed response at a level of 1 ms or less.

[7] A liquid crystal device according to any one of [1] to [6], which has an optical shutter function.

[8] A liquid crystal device according to any one of [1] to [7], wherein the liquid crystal molecular alignment in the liquid crystal element can be represented by the temperature of the liquid crystal material.

[9] A liquid crystal device according to any one of claims [1] to [8], wherein the liquid crystal molecular alignment in the liquid crystal material can be represented by the intensity of output light from one of the polarizing elements.

[10] A liquid crystal device, comprising at least:

a pair of polarizing elements being disposed so that the transmission axes thereof are perpendicular to each other, a liquid crystal element disposed between the pair of polarizing elements, and light generation means for providing light to the liquid crystal element, wherein the liquid crystal element comprises, at least, a pair of substrates and a liquid crystal material disposed between the pair of substrates; the minimum strength of light having passed through the liquid crystal element being measurable in terms of the angle of optical axis azimuth.

[11] A liquid crystal device, comprising at least:

a pair of polarizing elements being disposed so that the transmission axes thereof are perpendicular to each other, a liquid crystal element disposed between the pair of polarizing elements, rotation means for providing a desired rotation angle to the liquid crystal element, light generation means for providing light to the liquid crystal element, and light detection means for detecting light having passed through the liquid crystal element, wherein the liquid crystal element comprises, at least, a pair of substrates and a liquid crystal material disposed between the pair of substrates; the rotation means being rotatable so that the strength of light having passed through the liquid crystal element becomes minimum, and the angle of the rotation means can be measured in terms of the angle of optical axis azimuth.

BRIEF DESCRIPTION OF THE DRAWINGS

Fig. 1 is a schematic plan view showing the optical axis azimuth and temperature dependency in the state of an electric field being not applied in a surface-stabilized ferroelectric liquid crystal.
Fig. 2 is a graph showing one example of the temperature dependency of the tilt angle in a surface-stabilized ferroelectric liquid crystal.

Fig. 3 is a graph showing one example of the temperature dependency of the rotation angle θ in PSS-LCD.

Fig. 4 is a schematic plan view showing the optical axis azimuth in the state of an electric field being not applied in PSS-LCD.

Fig. 5 is a schematic plan view and a schematic cross-sectional view, showing the electric field applying direction and the rotation angle and rotation direction of the optical axis azimuth in PSS-LCD.

Fig. 6 is a schematic plan view showing the temperature dependency in PSS-LCD.

Fig. 7 is a schematic cross-sectional view showing the light-shielding state and light-transmitting state of the optical shutter in PSS-LCD.

Fig. 8 is a schematic cross-sectional view showing the temperature dependency of the optical shutter in PSS-LCD.

Fig. 9 is a graph showing one example of reduction of the contrast ratio due to temperature dependency of the optical shutter in PSS-LCD.

Fig. 10 is a schematic plan view showing one example of the method for improving the temperature dependency by the voltage control in a PSS-LCD optical shutter.

Fig. 11 is a schematic cross-sectional view showing one example of the optical shutter by PSS-LCD.

Fig. 12 is a schematic cross-sectional view showing another example of the optical shutter by PSS-LCD.

Fig. 13 is a schematic plan view showing one example of the principle of improving the temperature dependency by the element rotation control in a PSS-LCD optical shutter.

Fig. 14 is a schematic cross-sectional view showing one example of the optical shutter by PSS-LCD (an example where mechanical driving is utilized).

Fig. 15 is a schematic cross-sectional view showing another example of the optical shutter by PSS-LCD (an example where mechanical driving is utilized).

Fig. 16 is a schematic perspective view showing one example of the construction for mechanically improving the temperature dependency of an optical shutter by FSS-LCD.

Fig. 17 is a schematic perspective view showing another example of the construction for mechanically improving the temperature dependency of an optical shutter by PSS-LCD.

Fig. 18 shows the results of a working example where the temperature dependency is improved by the control of the applied voltage to an optical shutter by PSS-LCD.

Fig. 19 is a graph showing one example of the improvement of temperature dependency by the control of the applied voltage to an optical shutter by PSS-LCD.

Fig. 24 is a schematic perspective view showing one example of the construction (measurement system) of components suitable for the exact measurement of optical axis azimuth, which is usable in the present invention.

Fig. 25 is a schematic perspective view showing one example of the PSS-LCD cell produced in a working example of the present invention.

Fig. 26 is a graph showing one example of the control voltage curve obtained in Example of the present invention.

Fig. 27 is a graph showing one example of the control rotation angle curve obtained in a working example of the present invention.

BEST MODE FOR CARRYING OUT THE INVENTION

The present invention is described in detail below by referring to the drawings, if desired. In the following description, unless otherwise indicated, the "parts" and "%" indicating a quantitative ratio are on the mass basis.

(Embodiment 1 of Liquid Crystal Device)

In one embodiment of the present invention, the liquid crystal device comprises at least a pair of polarizing elements with respective transmission axes being perpendicular to each other, a liquid crystal element disposed between the pair of polarizing elements, and voltage applying means for applying a voltage to the liquid crystal element. The liquid crystal element is a liquid crystal element which comprises at least a pair of substrates and a liquid crystal material disposed between the pair of substrates and at the same time, in which the liquid crystal material can rotate the optical axis azimuth in response to the strength and/or direction of an electric field to be applied thereto. Furthermore, the voltage applying means is voltage applying means capable of controlling a voltage to be applied from the voltage applying means to the liquid crystal element in accordance with the liquid crystal molecular alignment in the liquid crystal material.

(Embodiment 2 of Liquid Crystal Device)

In another embodiment of the present invention, the liquid crystal device is a liquid crystal device comprising at least a pair of polarizing elements being disposed so that the transmission axes thereof are perpendicular to each othe, a liquid crystal element disposed between the pair of polarizing elements, and angle adjusting means for adjusting the angle between the liquid crystal element and the polarizing element. The liquid crystal element is a liquid crystal element which comprises at least a pair of substrates and a liquid crystal material disposed between the pair of substrates and at the same time, in which the liquid crystal material can rotate the optical axis azimuth in response to the strength and/or direction of an electric field to be applied thereto. Furthermore, the angle adjusting means is angle adjusting means capable of controlling the angle between the liquid crystal element and the polarizing element in accordance with the liquid crystal molecular alignment in the liquid crystal material.

(Principle of the Present Invention)

The principle of the present invention is described below by making a comparison with the conventional temperature compensation method, if desired (one example of the liquid crystal device).

For example, the following case is described as a practical example of the liquid crystal device. As for the stereoscopic image display technique, a display method sometimes called a slit-type integral photography system is known. In this display method, three-dimensional images seen from different viewpoints and disposed like a strip are sequentially displayed, as a result, three-dimensional images at a plurality of different viewpoints produce afterimages within the afterimage time of the human eye and are perceived as a stereoscopic image.

In this integral photography technique, for sequentially displaying three-dimensional images disposed like a strip, a strip-shaped high-speed optical shutter is used. The pitch of strips is very narrow and at the same degree as the pixel pitch of normal FPD (flat panel display), and a device following a very high-speed shuttering time is required to sequentially display a plurality of images in about 1/30 seconds that is the afterimage time of the human eye.

For example, when 8 image strips in different fields of view are sequentially displayed in 1/30 seconds, the transmission time becomes about 4.2 milli-seconds per one strip. In the usage where a high-speed shutter operation is performed in such a micro-region, it is optimal to apply a liquid crystal display technique of performing the image display by light control similarly in a micro-region. However, for realizing the above-described transmission time of about 4.2 milli-seconds, a response speed with the rise-up time and the rise-down time each being 1 milli-second or less is necessary, and this is difficult to realize in the conventional optical shutters using a general TN liquid crystal.

It is supposed that in the case of using a polymer dispersion liquid crystal recently developed, a high-speed response of several milli-seconds can be obtained, but the liquid crystal viscosity needs to be reduced by applying a voltage of about 100 V and raising the ambient temperature to about 100°C. Also, since light is scattered and thereby shielded, the contrast ratio when viewed directly is disadvantageously low.

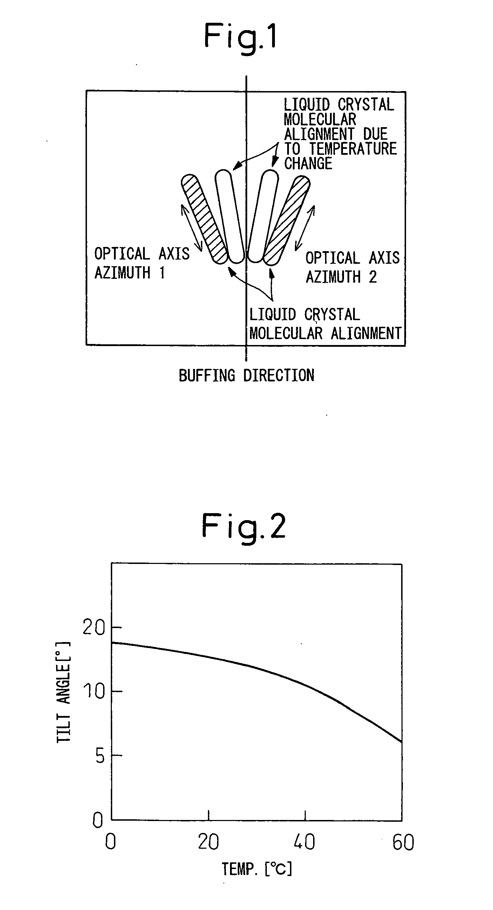

The problem in terms of the response speed is supposed to be solvable by the use of a surface-stabilized ferroelectric liquid crystal exhibiting high-speed response with the rise-up time and rise-down time each being several hundreds of micro-seconds. However, as shown in the schematic plan view of Fig. 1 and in the graph of Fig. 2, in an optical shutter, the bi-stable position and angle (tilt angle) for transmission and light shielding generally vary depending on the element temperature and therefore, a mechanism to compensate for such an effect of temperature is required (in the case of using PSS-LCD).

The technique of a polarization shielding-type smectic liquid crystal display (PSS-LCD) previously proposed by the present applicant (for details of this PSS-LCD, for example, Kohyo (National Publication of Translated Version) No. 2006-515935 may be referred to) is a technique enabling, for example, an electro-optical response in 400 micro-seconds as well as continuous gradation display at a low voltage.

Also, by virtue of good uniformity of alignment as compared with general ferroelectric liquid crystals, the contrast is locally high and in the case of PSS-LCD, even when fabricated as a large-screen display, the variation of the optical axis direction in the plane is reduced.

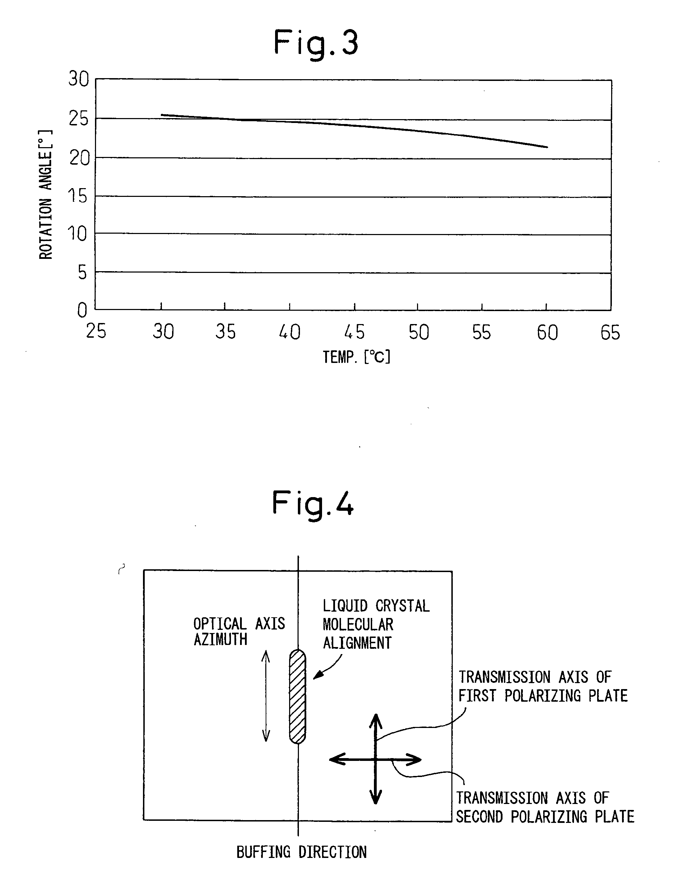

However, the temperature dependency like a surface-stabilized ferroelectric liquid crystal display using the same smectic liquid crystal is observed also in this PSS-LCD. The graph of Fig. 3 shows one example of the temperature dependency of the rotation angle θ when a rectangular wave of $\pm 5$ V is applied to a PSS-LCD element. As shown from Fig. 3, it may be understood that compared with the temperature dependency of the tilt angle of the above-described surface-stabilized ferroelectric liquid crystal, the temperature dependency of the rotation angle θ in PSS-LCD is gentle but the rotation angle is changed by the temperature change.

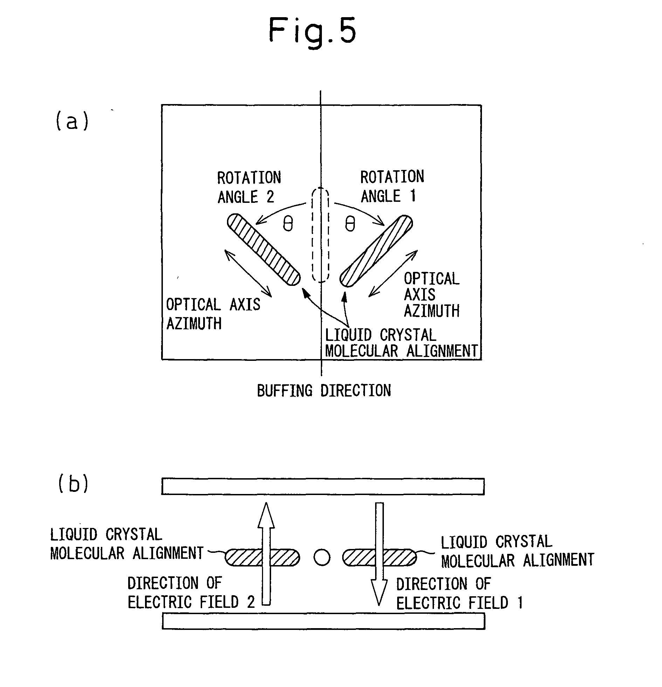

In the conventional gradation display PSS-LCD, a PSS-LCD element is disposed between two polarizing plates (under cross-Nicol arrangement) with respective transmission axes being perpendicular to each other and as shown in Fig. 4, the element is disposed such that the optical axis azimuth at the time of not applying an electric field becomes parallel to the transmission axis of either one polarizing plate. When light is made to be incident on such a system, light turned into linear polarization by the first polarizing plate is not subject to birefringent action of the liquid crystal layer and shielded by the second polarizing plate to minimize the transmitted light. As shown in Fig. 5, when an electric field is applied, the rotation angle becomes a rotation angle 1 or a rotation angle 2 according to the electric field direction and allows light to be transmitted by the birefringent action.

The rotation angle θ is determined by the electric field intensity, and the transmittance can be controlled by analog gradation. The transmitted light quantity here is expressed by the following formula (1) and when the rotation angle θ is ±45° and Δnd is λ/2, the transmitted light quantity becomes maximum.

Formula (1):

$$I = I_0 \cdot \sin^2(2\theta) \cdot \sin^2\left(\frac{\pi\Delta nd}{\lambda}\right)$$

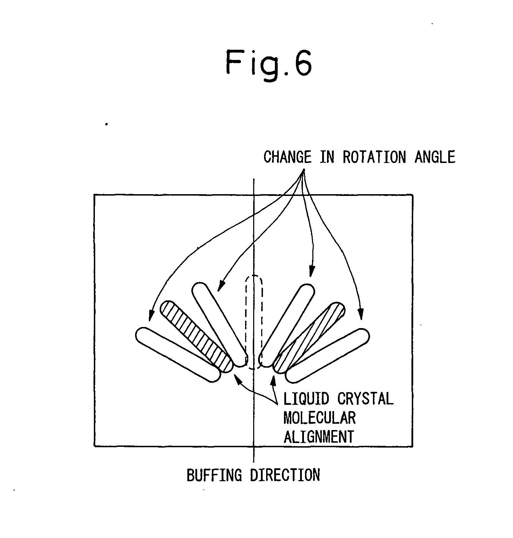

However, this rotation angle has temperature dependency as described above and even with the same electric field intensity, as shown in Fig. 6, the right/left rotation angle tends to be small at a high temperature and be large at a low temperature (that is, as indicated by "Change of Rotation Angle" in Fig. 6, when the element temperature is varied, even if an electric field to be applied thereto intensity is the same, the rotation angle changes). Therefore, even with the same electric field intensity, the transmittance may be changed according to the element temperature, and the light/dark ratio (contrast ratio) may decrease at high temperatures.

(Operation Example of Optical Shutter)

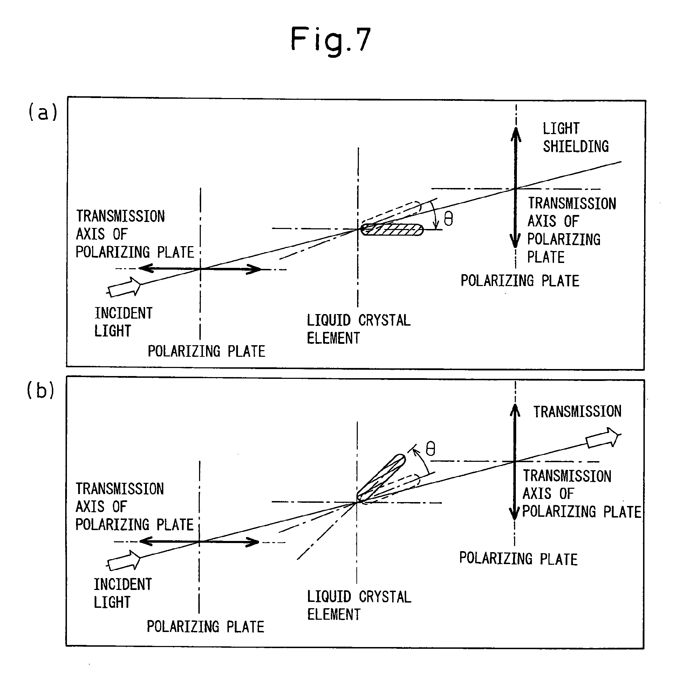

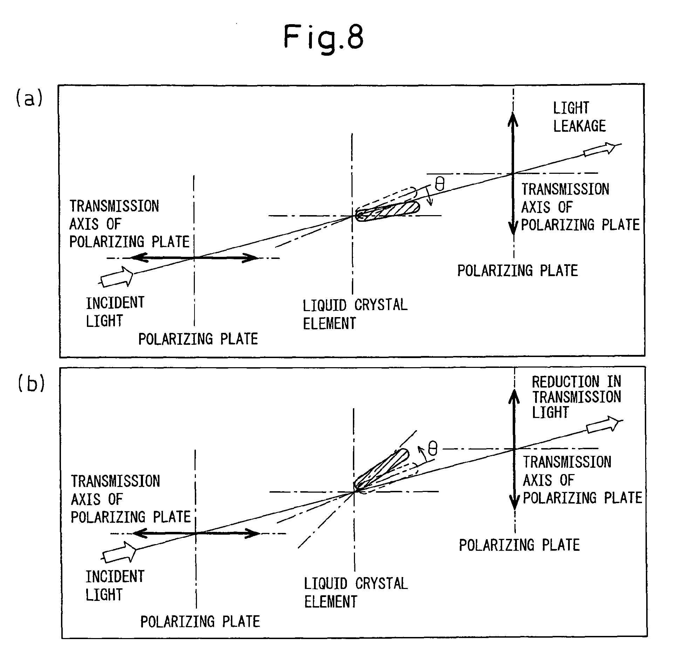

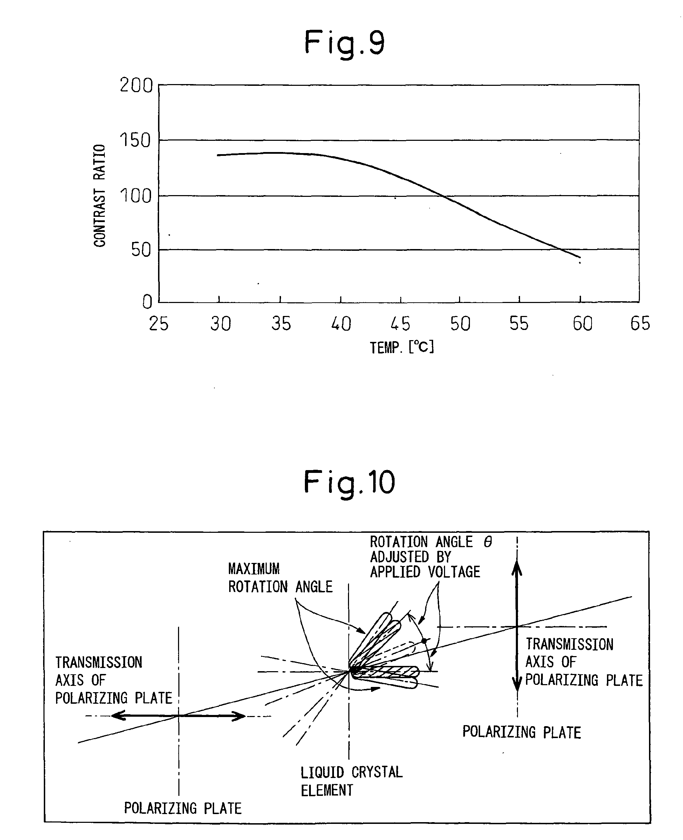

The operation in one preferred embodiment of the optical shutter of the present invention is described below.
For example, as shown in Fig. 7(a), a PSS-LCD element is disposed between two polarizing plates with respective transmission axes being perpendicular and when out of two directions of electric field to be applied, an electric field in one direction is applied to make the optical axis azimuth rotated by a rotation angle θ according to the electric field intensity to be parallel to the transmission axis of one polarizing plate, the light is shielded to minimize the transmitted light. This state is referred to as the "light-shielding state" of the optical shutter.
Thereafter, as shown in Fig. 7(b), an electric field in the opposite direction from the "light-shielding state" is applied to rotate the optical axis azimuth by a rotation angle θ according to the electric field intensity, as a result, light is transmitted. This state is referred to as the "light-transmitting state".
The liquid crystal alignment at these light-transmitting state and light-shielding state is very excellent as compared with the liquid crystal alignment in the state of an electric field being not applied and the transmitted light quantity is more increased in the light-transmitting state, while raising the light-blocking ratio in the light-shielding state. However, as shown in Fig. 8, when the element temperature is changed in the arrangement state above, even if an electric field to be applied thereto is the same, the rotation angle of the optical axis azimuth of the PSS-LCD element is changed and it is likely that light is leaked in the light-shielding state of Fig. 8(a) and the transmitted light quantity decreases in the light-transmitting state of Fig. 8(b).
The graph of Fig. 9 showing the temperature dependency when adjusting the light-shielding state at 30°C reveals that the contrast ratio decreases as the temperature rises. In order to solve such reduction of the contrast ratio, as shown in the schematic cross-sectional view of Fig. 10, the element temperature is set to, in the operation temperature range, a temperature giving a smallest rotation angle θ of the optical axis azimuth, and the optical axis azimuth rotated by the application of an electric field in one direction out of two electric field directions is allowed to become parallel to the transmission axis of one polarizing plate (in Fig. 10, the indication "maximum rotation angle" means "a maximum rotation angle at which the optical axis azimuth can be originally rotated").
By setting the system as shown in Fig. 10, even when the temperature is changed and the rotation angle θ of the optical axis azimuth becomes large, the rotation angle θ can be made small by weakening the intensity of the electric field applied, whereby the transmission axis of the polarizing plate can be agreed with the optical axis azimuth and the rotation angle in the light-shielding state and the light-transmitting state can be made constant.
In the case where the total of right/left rotation angles for the smallest rotation angle θ in the operation temperature range is 45° or more, by performing the above-described control, the total of the right/left rotation angles of the optical axis azimuth can be adjusted to 45° in the entire operation temperature range and the transmitted light quantity in the light-transmitting state can be kept maximum.

(Construction for Adjustment of Rotation Angle θ)

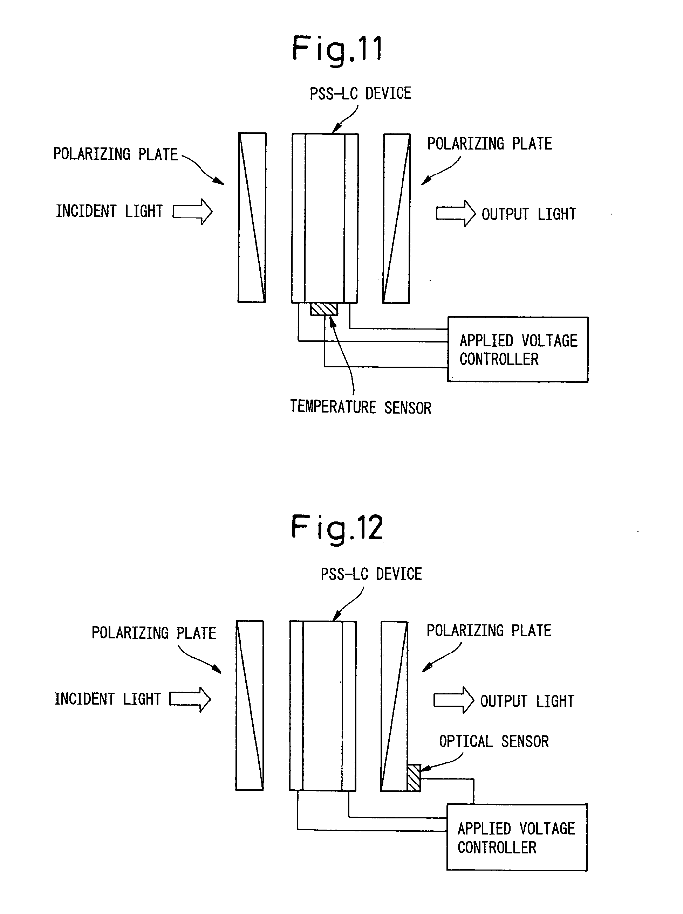

As regards the construction for the adjustment of the rotation angle θ, constructions of apparatuses of Figs. 11 and 12 and the details of the entire operation are described below.
First, the construction in the schematic side view of Fig. 11 is described as one example.

Referring to Fig. 11, PSS-LCD is disposed between perpendicularly arranged polarizing plates. To this PSS-LCD, a temperature sensor element such as thermistor or platinum resistance element is equipped to sequentially acquire the temperature information of PSS-LCD. The acquired temperature information is compared with the information of electric field applied to PSS-LCD with respect to the measured temperature, which is recorded in the control part.

An electric field to be applied thereto information recorded in the control part is the information prepared by previously measuring the electric field giving a minimum transmitted light quantity in the light-shielding state of the PSS-LCD element and a maximum transmitted light quantity in the light-transmitting state with respect to the measured temperature. Accordingly, by controlling the system to apply an electric field with matched intensity to PSS-LCD, a condition providing a minimum transmitted light quantity in the light-shielding state and a maximum transmitted light quantity in the light-transmitting state can be always reproduced.

As another example, the construction in the schematic side view of Fig. 12 is described. A PSS-LCD element is disposed between perpendicularly arranged polarizing plates. On the light outgoing side, an optical sensor element such as photodiode or phototransistor is fixed to allow the transmitted light to be incident thereinto and sequentially acquires the transmitted light quantity information. There is performed a feedback control of judging whether the acquired transmitted light quantity is a minimum transmitted light quantity at the time of light-shielding state or a maximum transmitted light quantity at the time of light-transmitting state, and if the case is not so, changing the intensity of electric field applied to the PSS-LCD element, thereby acquiring the transmitted light quantity. By employing such a construction, the light-shielding state and the light-transmitting state can be constantly kept in the optimal state.

In practice, when the angle of the optical axis direction and the angle of the transmission axis of the polarizing plate come close, the transmitted light quantity difference tends to become small, increasing the difficulty in sensing a small light quantity difference in a large range as in the case of detecting the light-transmitting state. Therefore, in view of adjustment precision, it is rather preferred to adjust the application of an electric field so as to give a minimum transmitted light quantity in the light-shielding state. The same applies to the measurement of a control voltage to be applied, which is memorized by a method using also a temperature sensor. As for the optical sensor and temperature sensor, in view of temporal variation and frequency of the element temperature change, those having a cost-effective response speed may be selected.

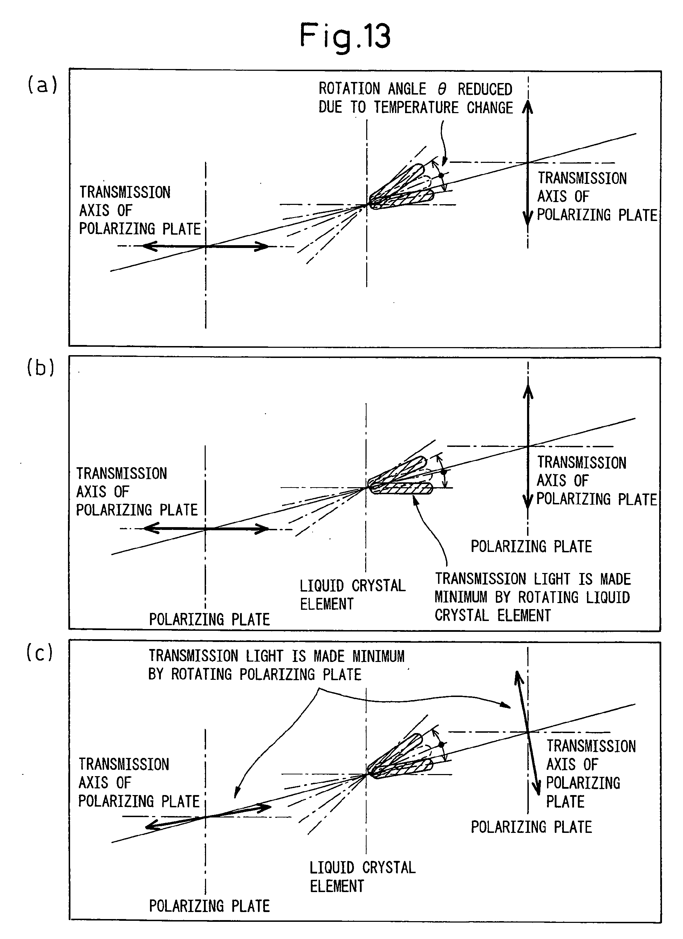

In the case where the change of maximum transmitted light quantity in the light-transmitting state need not be taken into consideration, the transmitted light quantity in the light-shielding state may be minimized also by mechanically adjusting the rotation angle $\theta$. In the case of disposing a PSS-LCD element between two perpendicularly arranged polarizing plates, a mechanical mechanism shown in Fig. 13(b) of rotating the PSS-LCD element such that the optical axis azimuth rotated by the application of an electric field in one direction out of two directions of electric field to be applied becomes parallel to the transmission axis of one polarizing plate, or a mechanical mechanism shown in Fig. 13 (c) of rotating two polarizing plates while keeping the perpendicular relationship may be employed to thereby minimize the transmitted light quantity in the light-shielding state (incidentally, in Fig. 13(a), the indication "rotation angle $\theta$ reduced due to temperature change" means a "rotation angle $\theta$ that has become small due to temperature change").

(Rotation Mechanism)

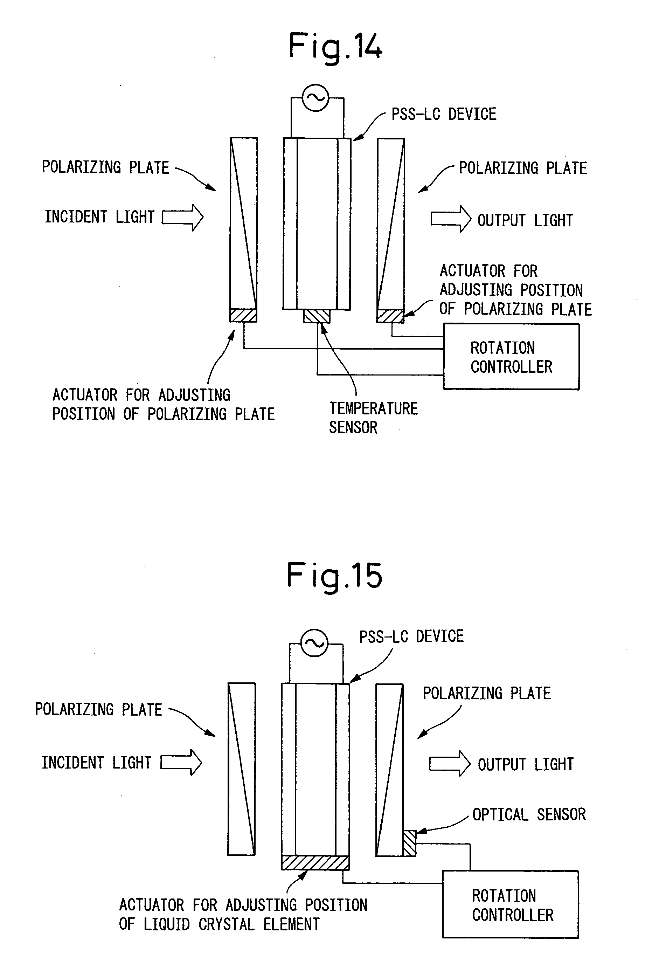

As regards the construction of the rotation mechanism, the construction of the apparatuses of Figs. 14 to 16 and the details of the entire operation are described below.

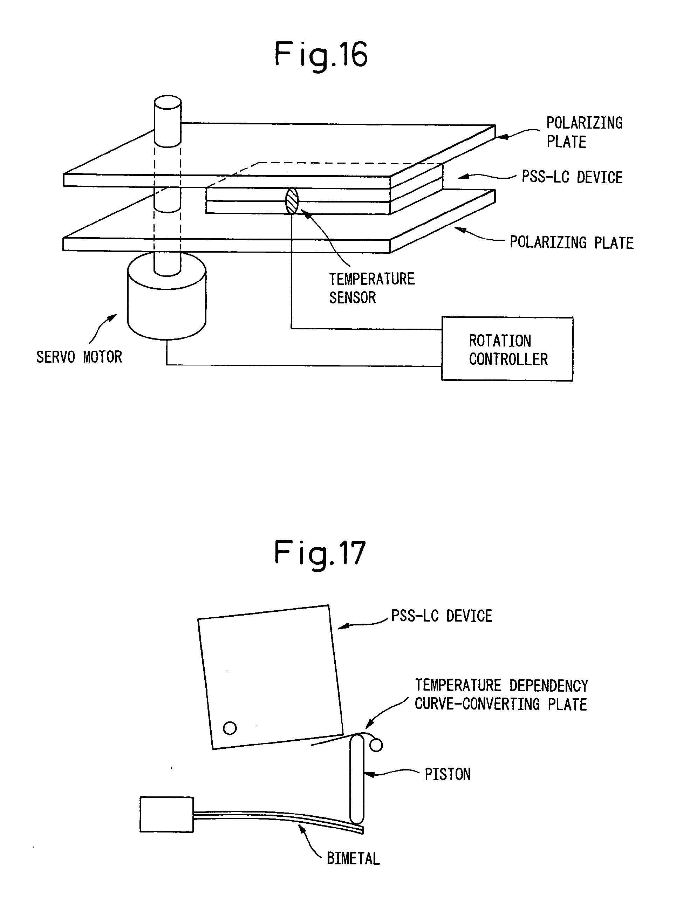

For example, a method of rotating the polarizing plate by a servo motor shown in Fig. 16, and a method of rotating the element by means of a piezoelectric element may be employed as the rotation mechanism. As one example of the rotation angle adjustment in this case, the case of using a servo motor of Fig. 16 that is one example of the construction in the schematic side view of Fig. 14 is described.

Referring to Fig. 16, a PSS-LCD element is disposed between perpendicularly arranged polarizing plates. To this PSS-LCD element, a temperature sensor element such as thermistor or platinum resistance element is equipped to sequentially acquire the temperature information of the PSS-LCD element. The acquired temperature information is compared with the angle information of the perpendicularly arranged polarizing plates with respect to the PSS-LCD element for the measured temperature, which is recorded in the control part.

The angle information recorded in the control part is the information prepared by previously measuring the angle giving a minimum transmitted light quantity in the light-shielding state of the PSS-LCD element for the measured temperature. Accordingly, by controlling the rotation of the servo motor to tilt the perpendicularly arranged polarizing plates at the matched angle, a condition providing a minimum transmitted light quantity in the light-shielding state can be reproduced.

As another example, the construction in the schematic side view of Fig. 15 is described. A PSS-LCD element is disposed between perpendicularly arranged polarizing plates. On the light outgoing side, an optical sensor element such as photodiode or phototransistor is fixed to allow the transmitted light to be incident thereinto and sequentially acquires the transmitted light quantity information. There is performed a feedback control of judging from the acquired transmitted light quantity whether a minimum transmitted light quantity is provided in the light-shielding state, and if the case is not so, rotating the PSS-LCD element by an actuator, thereby again acquiring the transmitted light quantity. By employing such a construction, the light-shielding state can be constantly kept in the optimal state.

In the case where the element temperature change is not sharp, the control operation frequency decreases and there arises substantially no problem in terms of abrasion, vibration and noise due to rocking of the mechanical mechanism.

(Utilization of Element Undergoing Displacement of Contour)

In addition to the above-described mechanical system, by utilizing an element of which contour is displaced depending on the temperature, the polarizing plate or liquid crystal element can be rotated or tilted at the same time with temperature measurement.

As one example of the construction utilizing such an element of which contour is displaced, the construction in the schematic view of Fig. 17 is described.

Referring to Fig. 17, a bimetal is utilized as the actuator for rotating the PSS-LCD or polarizing plate in Fig. 14 or 15. The bimetal is an element obtained by laminating together two metal sheets differing in the coefficient of thermal expansion and has a property of being deformed according to the temperature. Since the deformation amount depends on the temperature, this element is used in a thermometer or a temperature control device.

Similarly to such a device, by utilizing the temperature-related deformation as an actuator, the polarizing plate or PSS-LCD can be rotated or tilted at the same time with temperature measurement.

In the schematic view of Fig. 17, the bimetal is disposed to undergo a displacement due to temperature and thereby move a piston up or down. Even if the polarizing plate or PSS-LCD is rotated by transmitting this movement directly thereto, because of a difference in the temperature dependency between the bimetal and the PSS-LCD, the transmitted light quantity cannot be controlled to the minimum in the light-shielding state. For this reason, a temperature dependency curve-converting plate that allows the displacement of the bimetal to correspond to the temperature dependency curve of PSS-LCD, is inserted between the piston and the PSS-LCD. By employing such a construction, the transmitted light quantity in the light-shielding state can be controlled to the minimum while completely eliminating an electric signal circuit in the temperature compensation portion. This method is advantageous in that the structure is simple and since an electric circuit-related failure can be completely eliminated, the reliability is high.

(Manual Adjustment)

In the case where the change of the element temperature occurs at a low frequency, the transmitted light quantity in the light-shielding state can be minimized also by manually rotating and/or tilting the polarizing plate or liquid crystal element while observing the transmitted light quantity in the light-shielding state with an eye. Furthermore, in the case where the temperature of the element used is fixed, the transmitted light quantity in the light-shielding state can be minimized by preparing a polarizing plate or liquid crystal element previously rotated or tilted in agreement with the temperature of the element used and refixing it according to the temperature of the element used.

The fundamental concept of the above-described liquid crystal device according to the present invention is to fabricate, for example, a liquid crystal device (for example, having an optical shutter function) construction by utilizing a specific electro-optical response of the liquid crystal material (for example, PSS-LCD) used and thereby enable an optical shutter with high transmittance, high light-blocking ratio and high contrast ratio while keeping the high-speed responsivity. In the description above, for the convenience sake, an embodiment using PSS-LCD is mainly described, but irrespective of PSS-LCD, the method of the present invention can be applied as long as the liquid crystal material is a material capable of constituting an electro-optical element in which the optical axis azimuth is rotated in response to the strength and/or direction of an electric field to be applied thereto for applying the system above of the present invention. From the standpoint of more effectively bringing out the effects of the present invention, a liquid crystal material enabling a sufficiently high-speed response time is preferred.

(Polarizing Element)

As for the polarizing element usable in the present invention, a polarizing element conventionally used for fabricating a liquid crystal device can be used without any particular limitation. The shape, size, constituent element and the like thereof are also not particularly limited.

(Suitable Polarizing Element)

Examples of the polarizing element which can be suitably used in the present invention include the following:

π-Cell: Molecular Crystals and Liquid Crystals, Vol. 113, page 329 (1984), Phil Bos and K.R. Kehler-Beran

(Liquid Crystal Element)

The liquid crystal element according to an embodiment of the present invention comprises a pair of substrates and a liquid crystal material disposed between the pair of substrates.

(Liquid Crystal Material)

In the present invention, a liquid crystal material can be used without any particular limitation as long as it is a liquid crystal material capable of constituting an electro-optical element in which the optical axis azimuth is rotated in response to the strength and/or direction of an electric field to be applied thereto for applying the system of the present invention. Whether or not a certain liquid crystal material is usable in the present invention can be confirmed by the following "Confirmation Method for Optical Axis Azimuth Rotation". Also, in the present invention, a liquid crystal material capable of a predetermined high-speed response is suitably usable and whether or not a certain liquid crystal material can response at a sufficiently high speed can be confirmed by the following "Confirmation Method for Response Time".

(Confirmation Method for Optical Axis Azimuth Rotation)

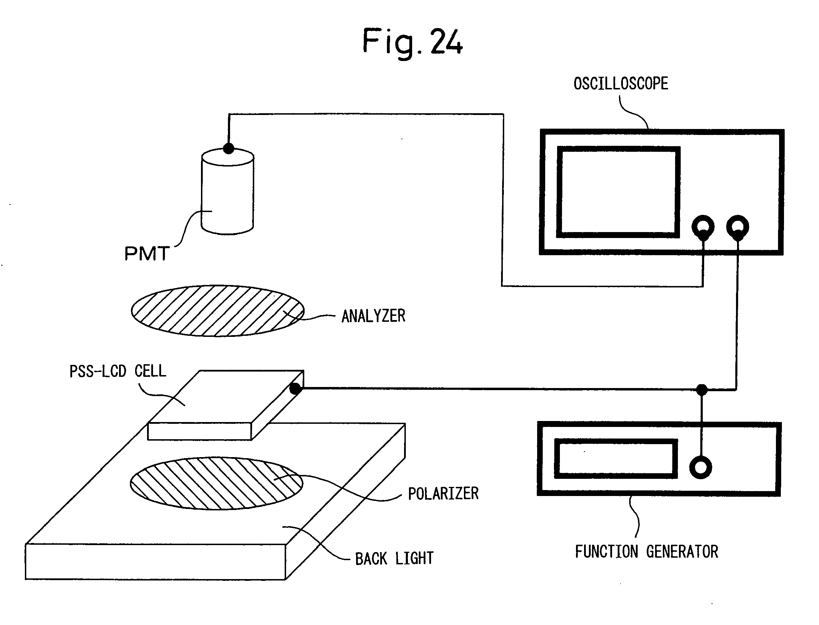

In regard to the method for measuring the optical axis azimuth rotation as a liquid crystal element, in the case of disposing a liquid crystal element in the cross-Nicol arrangement where a polarizer is disposed perpendicularly to an analyzer, when the optical axis agrees with the absorption axis of the analyzer, the intensity of transmitted light becomes minimum. Accordingly, the angle at which the minimum intensity of transmitted light in the cross-Nicol arrangement is obtained becomes the angle of optical axis azimuth. At this time, an electric field is not applied to the liquid crystal element. Using this angle as a reference angle, an angle at which the minimum intensity of transmitted light in the cross-Nicol arrangement is obtained when applying an electric field to the liquid crystal element is sought for. When an angle giving a minimum intensity upon application of an electric field is present and the angle giving a minimum intensity is an angle slipped from the reference angle and when the strength or direction of the electric field is varied and an increase or decrease of the rotation angle in accordance with the variation is observed, it can be confirmed that the optical axis direction is rotated. As regards the apparatus for confirmation, similarly to the confirmation method for optical axis azimuth, the rotation can be confirmed, for example, by an apparatus having a construction of Fig. 24.

(Confirmation Method for Response Time)

In the case where optical axis azimuth rotation is observed in the liquid crystal element, the speed of this rotation comes under the response time. A liquid crystal element is disposed at an angle giving a minimum transmitted light quantity in the cross-Nicol arrangement where a polarizer is disposed perpendicularly to an analyzer, and an electric field is applied to the liquid crystal element. The optical axis azimuth is rotated upon application of an electric field and therefore, the transmitted light quantity is changed. The degree of change in the transmitted light quantity becomes the degree of change in the rotation. Assuming that the transmitted light quantity in the state of an electric field being not applied is 0% and the transmitted light quantity that is changed by the application of an electric field and finally reaches a steady state is 100%, the time necessary for the transmitted light quantity to rise from 10% to 90% when an electric field is applied from the state of an electric field being not applied is designated as a rise-up response time, and the time necessary for the transmitted light quantity to drop from 90% to 10% when application of an electric field is stopped from the state of an electric field being applied is designated as a rise-down response time. For example, in PSS-LCD, the rise-up response time and the rise-down response time both are about 400 μs. As regards the apparatus for confirmation, similarly to "Confirmation Method for Optical Axis Azimuth", the response time can be confirmed, for example, by an apparatus having a construction of Fig. 24.

(Measuring Method for Optical Axis Azimuth Angle and Construction of Apparatus)

In regard to the method for exactly measuring the optical axis azimuth as a liquid crystal element, in the case of disposing a liquid crystal element in the cross-Nicol arrangement where a polarizer is disposed perpendicularly to an analyzer, when the optical axis agrees with the absorption axis of the analyzer, the intensity of transmitted light becomes minimum. Accordingly, the angle at which the minimum intensity of transmitted light in the cross-Nicol arrangement is obtained becomes the angle of optical axis azimuth. Example of the measuring apparatus include a polarizing microscope equipped with a photodetection element such as PMT (photomultiplier tube) in the tube part.
The schematic perspective view of Fig. 24 shows one example of the construction of components suitable for the exact measurement of optical axis azimuth. The polarizer and analyzer of the polarizing microscope are laid in the cross-Nicol arrangement, a liquid crystal element to be measured is disposed on the sample stage by arranging the reference angle to be the same as the absorption axis angle of the analyzer, and the sample stage is rotated to make minimum the light quantity detected by PMT. The angle of the sample stage here becomes the optical axis azimuth angle with respect to the reference angle of the liquid crystal element.

Example 1

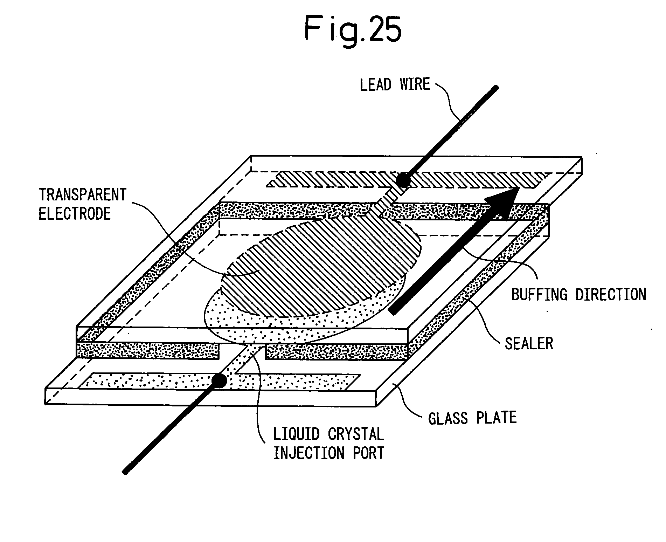

One example of the voltage control system is described as a working example of the present invention. Using a glass substrate having a size of 35 mm x 35 mm and a thickness of 0.7 mm, a circular transparent electrode ITO of 15 mm in diameter was patterned on the glass substrate. As shown in the schematic perspective view of Fig. 25, the glass substrates were laminated together by arranging the transparent electrodes to face each other, whereby a PSS-LCD cell was prepared.

In order to make constant the size of a gap for the liquid crystal layer by laying two glass substrates to face each other, a silica spacer having a particle diameter of 1.8 $\mu$m was used. The surfaces of two glass substrates were coated with polyimide, then baked and further subjected to buffing such that the buffing directions became parallel when overlapping the substrates. Thereafter, the spacer above dispersed in ethanol was scattered on the glass substrate on one side at a ratio of 100 particles/mm$^2$ and after overlapping the two glass substrates by arranging the transparent electrodes to face each other, a two-component epoxy resin was filled and fixed in the overlapped portion to produce an empty cell.

Into this cell, a liquid crystal material for PSS-LCD (produced by Nano Loa Inc.) was injected at an isotropic phase temperature of 110°C to produce a PSS-LCD cell. The angle of the optical axis azimuth of this panel was confirmed, as a result, the angle of the optical axis azimuth was almost parallel to the buffing direction.

A rectangular wave voltage of $\pm$5 V with a frequency of 200 Hz was applied to the panel obtained above, and the angle at which the transmitted light quantity became minimum when applying a voltage of -5 V, that is, the optical axis azimuth was measured. At this time, the ambient temperature was varied from 30 to 60°C to measure the temperature dependency of the optical axis azimuth rotation. In the measured ambient temperature of 30 to 60°C, the rotation angle of the optical axis azimuth at 60°C was 21.5° and minimum. This angle becomes the reference angle for the compensation of temperature dependency.

This PSS-LCD cell was set in the cross-Nicol arrangement where as shown in Fig. 24, a polarizer is disposed perpendicularly to an analyzer. At this time, the cell was set such that the absorption axis of the analyzer became parallel to the reference angle of 21.5°.

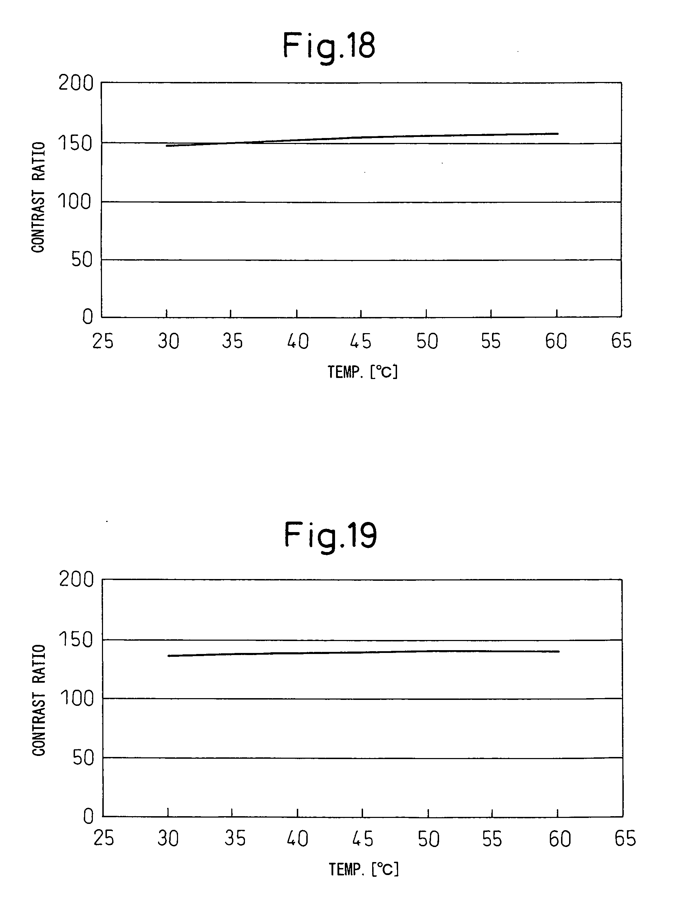

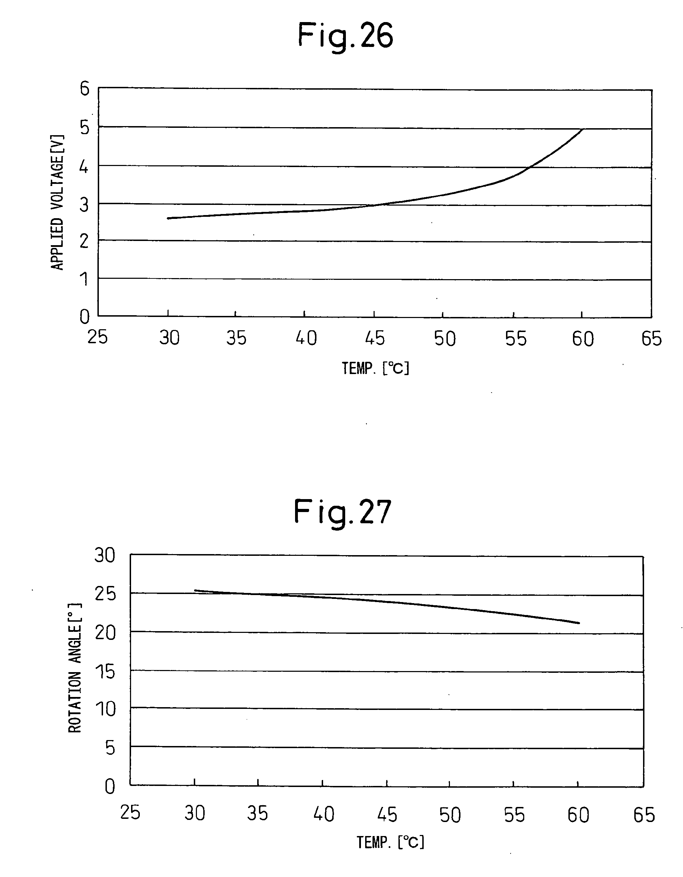

In such a construction, the voltage was controlled in accordance with the curve of Fig. 26 derived from the temperature dependency of the optical axis azimuth rotation measured above. In other words, this curve is a curve of the voltage at which the transmitted light quantity becomes minimum with respect to the ambient temperature. The results are shown in Fig. 18. It was confirmed that compared with the case of not controlling the voltage at all as in Fig. 9, variation of the contrast ratio is distinctly reduced.

Example 2

One example of the control utilizing mechanical rotation in the present invention is described below.

Similarly to Example 1, using a glass substrate having a size of 35 mm x 35 mm and a thickness of 0.7 mm, a circular transparent electrode ITO of 15 mm in diameter was patterned on the glass substrate. As shown in Fig. 25, the glass substrates were laminated together by arranging the transparent electrodes to face each other, whereby a PSS-LCD cell was prepared. In order to make constant the size of a gap for the liquid crystal layer by laying two glass substrates to face each other, a silica spacer having a particle diameter of 1.8 $\mu$m was used. The surfaces of two glass substrates were coated with polyimide, then baked and further subjected to buffing such that the buffing directions became parallel when overlapping the substrates. Thereafter, the spacer above dispersed in ethanol was scattered on the glass substrate on one side at a ratio of 100 particles/mm$^2$ and after overlapping the two glass substrates by arranging the transparent electrodes to face each other, a two-component epoxy resin was filled and fixed in the overlapped portion to produce an empty cell. Into this cell, a liquid crystal material for PSS-LCD (produced by Nano Loa Inc.) was injected at an isotropic phase temperature of 110°C to produce a PSS-LCD cell. The angle of the optical axis azimuth of this panel was confirmed, as a result, the angle of the optical axis azimuth was almost parallel to the buffing direction.

A rectangular wave voltage of $\pm$5 V with a frequency of 200 Hz was applied to the panel obtained above, and the angle at which the transmitted light quantity became minimum when applying a voltage of -5 V, that is, the optical axis azimuth was measured. At this time, the ambient temperature was varied from 30 to 60°C to measure the temperature dependency of the optical axis azimuth rotation. The results are shown in Fig. 27.

This PSS-LCD cell was set in the cross-Nicol arrangement where as shown in Fig. 24, a polarizer is disposed perpendicularly to an analyzer. Based on the optical axis azimuth when not applying a voltage to the PSS-LCD cell with respect to the absorption axis of the analyzer, the rotation angle was controlled by the ambient temperature in accordance with Fig. 27. The results are shown in Fig. 19. It was confirmed that similarly to Example 1, variation of the contrast ratio is distinctly reduced compared with the case of not controlling the rotation angle at all as in Fig. 9.

INDUSTRIAL APPLICABILITY

According to the present invention described above, a liquid crystal element (for example, PSS-LCD) capable of rotating the optical axis azimuth in response to the strength and/or direction of an electric field to be applied thereto is used and the temperature compensation is performed utilizing electro-optical characteristic specific to such liquid crystal display, so that a liquid crystal device reduced in the temperature dependency while substantially maintaining high transmittance can be realized.

**Claims**

1. A liquid crystal device, comprising at least:

   a pair of polarizing elements being disposed so that the transmission axes thereof are perpendicular to each other,
   a liquid crystal element disposed between the pair of polarizing elements, and
   voltage applying means for applying a voltage to the liquid crystal element,
   wherein the liquid crystal element comprises, at least, a pair of substrates and a liquid crystal material disposed between the pair of substrates; the optical axis azimuth of the liquid crystal element being rotatable in response to the strength and/or direction of an electric field to be applied thereto; and
   the voltage applying means is capable of controlling a voltage to be applied from the voltage applying means to the liquid crystal element, in response to the liquid crystal molecular alignment in the liquid crystal material.

2. A liquid crystal device comprising, at least:

   a pair of polarizing elements being disposed so that the transmission axes thereof are crossed with each other,
   a liquid crystal element disposed between the pair of polarizing elements, and
   angle adjusting means for adjusting the angle between the liquid crystal element and the polarizing element,
   wherein the liquid crystal element comprises, at least, a pair of substrates and a liquid crystal material disposed between the pair of substrates, the optical axis azimuth of the liquid crystal element being rotatable in response to the strength and/or direction of an electric field to be applied thereto; and
   the angle adjusting means is capable of controlling the angle between the liquid crystal element and the polarizing element in response to the liquid crystal molecular alignment in the liquid crystal material.

3. A liquid crystal device comprising, at least:

   a pair of polarizing elements being disposed so that the transmission axes thereof are perpendicular to each other,
   a liquid crystal element disposed between the pair of polarizing elements, and
   voltage applying means for applying a voltage to the liquid crystal element,
   wherein the liquid crystal element comprises, at least, a pair of substrates and a liquid crystal material disposed between the pair of substrates; the initial molecular alignment in the liquid crystal element having a direction which is parallel or almost parallel to the alignment treatment direction for the liquid crystal material; the liquid crystal material showing almost no spontaneous polarization which is perpendicular to the pair of substrates in the absence of a voltage to be externally applied thereto; and
   the voltage applying means is capable of controlling a voltage to be applied from the voltage applying means to the liquid crystal element, in response to the liquid crystal molecular alignment in the liquid crystal material.

4. A liquid crystal device, comprising at least:

   a pair of polarizing elements being disposed so that the transmission axes thereof are perpendicular to each other,
   a liquid crystal element disposed between the pair of polarizing elements, and
   angle adjusting means for adjusting the angle between the liquid crystal element and the polarizing element,
   wherein the liquid crystal element comprises at least a pair of substrates and a liquid crystal material disposed between the pair of substrates; the initial molecular alignment in the liquid crystal element having a direction which is parallel or almost parallel to the alignment treatment direction for the liquid crystal material; the liquid crystal material showing almost no spontaneous polarization which is perpendicular to the pair of substrates in the absence of a voltage to be externally applied thereto; and

the angle adjusting means is capable of controlling the angle between the liquid crystal element and the polarizing element in response to the liquid crystal molecular alignment in the liquid crystal material.

5. A liquid crystal device according to claim 1 or 2, wherein the liquid crystal element is capable of rotating the optical axis azimuth in response to the strength and/or direction of an electric field to be applied thereto at a level of 10 to 2 V/$\mu$m.

6. A liquid crystal device according to claim 1, 2 or 5, wherein the liquid crystal element is capable of high-speed response at a level of 1 ms or less.

7. A liquid crystal device according to any one of claims 1 to 6, which has an optical shutter function.

8. A liquid crystal device according to any one of claims 1 to 7, wherein the liquid crystal molecular alignment in the liquid crystal element can be represented by the temperature of the liquid crystal material.

9. A liquid crystal device according to any one of claims 1 to 8, wherein the liquid crystal molecular alignment in the liquid crystal material can be represented by the intensity of output light from one of the polarizing elements.

# Fig.1

LIQUID CRYSTAL MOLECULAR ALIGNMENT DUE TO TEMPERATURE CHANGE

OPTICAL AXIS AZIMUTH 1

OPTICAL AXIS AZIMUTH 2

LIQUID CRYSTAL MOLECULAR ALIGNMENT

BUFFING DIRECTION

# Fig.2

# Fig.3

# Fig.4

# Fig.5

(a)

ROTATION ANGLE 2      ROTATION ANGLE 1

θ    θ

OPTICAL AXIS AZIMUTH

OPTICAL AXIS AZIMUTH

LIQUID CRYSTAL MOLECULAR ALIGNMENT

BUFFING DIRECTION

(b)

LIQUID CRYSTAL MOLECULAR ALIGNMENT

DIRECTION OF ELECTRIC FIELD 2

LIQUID CRYSTAL MOLECULAR ALIGNMENT

DIRECTION OF ELECTRIC FIELD 1

# Fig.6

CHANGE IN ROTATION ANGLE

LIQUID CRYSTAL
MOLECULAR
ALIGNMENT

BUFFING DIRECTION

# Fig.7

(a)

LIGHT
SHIELDING

TRANSMISSION
AXIS OF
POLARIZING PLATE

θ

TRANSMISSION
AXIS OF
POLARIZING
PLATE

POLARIZING PLATE

INCIDENT
LIGHT

POLARIZING PLATE

LIQUID CRYSTAL
ELEMENT

(b)

TRANSMISSION

TRANSMISSION
AXIS OF
POLARIZING PLATE

θ

TRANSMISSION
AXIS OF
POLARIZING PLATE

POLARIZING PLATE

INCIDENT
LIGHT

POLARIZING PLATE

LIQUID CRYSTAL
ELEMENT

# Fig.8

(a)

TRANSMISSION
AXIS OF
POLARIZING PLATE

INCIDENT
LIGHT

POLARIZING PLATE

LIQUID CRYSTAL
ELEMENT

θ

LIGHT
LEAKAGE

TRANSMISSION
AXIS OF
POLARIZING PLATE

POLARIZING PLATE

(b)

TRANSMISSION
AXIS OF
POLARIZING PLATE

INCIDENT
LIGHT

POLARIZING PLATE

LIQUID CRYSTAL
ELEMENT

θ

REDUCTION IN
TRANSMISSION
LIGHT

TRANSMISSION
AXIS OF
POLARIZING PLATE

POLARIZING PLATE

# Fig.9

# Fig.10

# Fig.11

PSS-LC DEVICE

POLARIZING PLATE

POLARIZING PLATE

INCIDENT LIGHT

OUTPUT LIGHT

APPLIED VOLTAGE
CONTROLLER

TEMPERATURE SENSOR

# Fig.12

PSS-LC DEVICE

POLARIZING PLATE

POLARIZING PLATE

INCIDENT LIGHT

OUTPUT LIGHT

OPTICAL SENSOR

APPLIED VOLTAGE
CONTROLLER

# Fig.13

(a)

ROTATION ANGLE θ REDUCED
DUE TO TEMPERATURE CHANGE

TRANSMISSION
AXIS OF
POLARIZING PLATE

TRANSMISSION
AXIS OF
POLARIZING PLATE

(b)

TRANSMISSION
AXIS OF
POLARIZING PLATE

TRANSMISSION
AXIS OF
POLARIZING PLATE

POLARIZING PLATE

LIQUID CRYSTAL
ELEMENT

TRANSMISSION LIGHT IS MADE
MINIMUM BY ROTATING LIQUID
CRYSTAL ELEMENT

POLARIZING PLATE

(c)

TRANSMISSION LIGHT IS MADE MINIMUM
BY ROTATING POLARIZING PLATE

TRANSMISSION
AXIS OF
POLARIZING PLATE

TRANSMISSION
AXIS OF
POLARIZING
PLATE

POLARIZING PLATE

LIQUID CRYSTAL
ELEMENT

POLARIZING PLATE

# Fig.14

PSS-LC DEVICE

POLARIZING PLATE

POLARIZING PLATE

INCIDENT LIGHT ⟹

⟹ OUTPUT LIGHT

ACTUATOR FOR
ADJUSTING POSITION
OF POLARIZING PLATE

ROTATION
CONTROLLER

ACTUATOR FOR ADJUSTING
POSITION OF POLARIZING PLATE

TEMPERATURE
SENSOR

# Fig.15

PSS-LC DEVICE

POLARIZING PLATE

POLARIZING PLATE

INCIDENT LIGHT ⟹

⟹ OUTPUT LIGHT

OPTICAL SENSOR

ACTUATOR FOR ADJUSTING POSITION
OF LIQUID CRYSTAL ELEMENT

ROTATION
CONTROLLER

# Fig.16

POLARIZING PLATE

PSS-LC DEVICE

POLARIZING PLATE

TEMPERATURE SENSOR

SERVO MOTOR

ROTATION CONTROLLER

# Fig.17

PSS-LC DEVICE

TEMPERATURE DEPENDENCY CURVE-CONVERTING PLATE

PISTON

BIMETAL

# Fig.18

# Fig.19

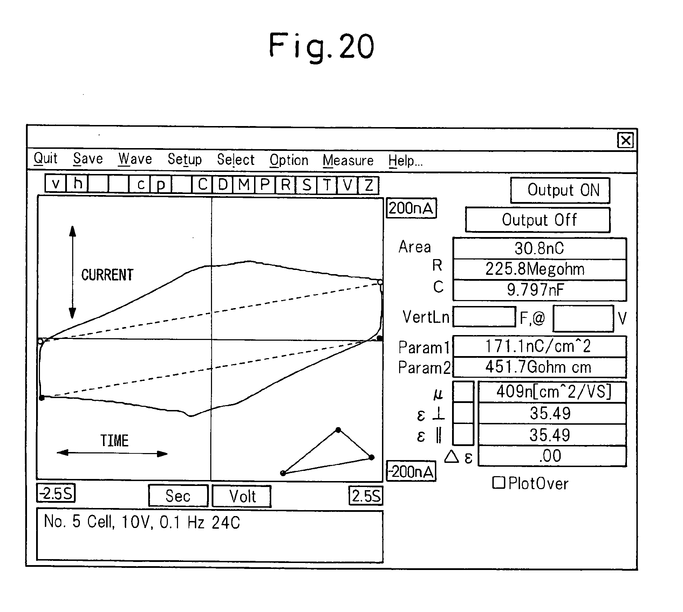

# Fig.20

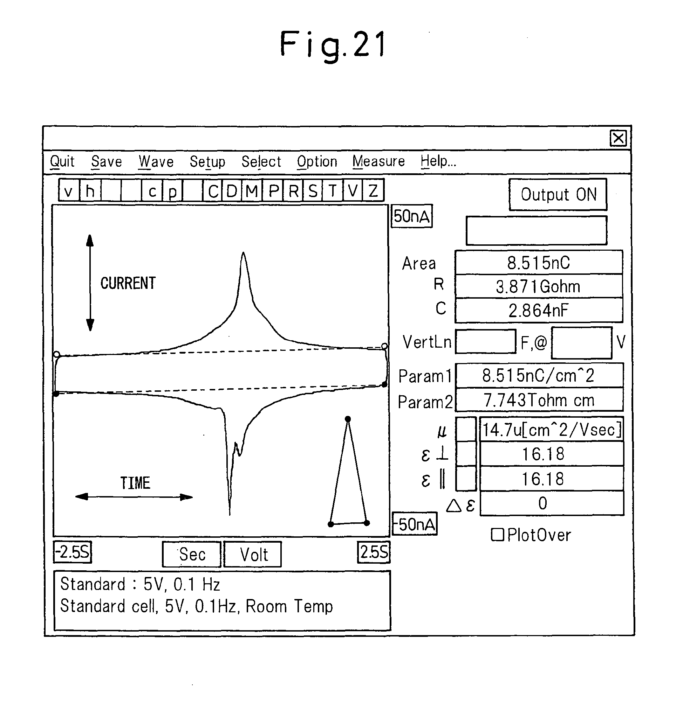

# Fig.21

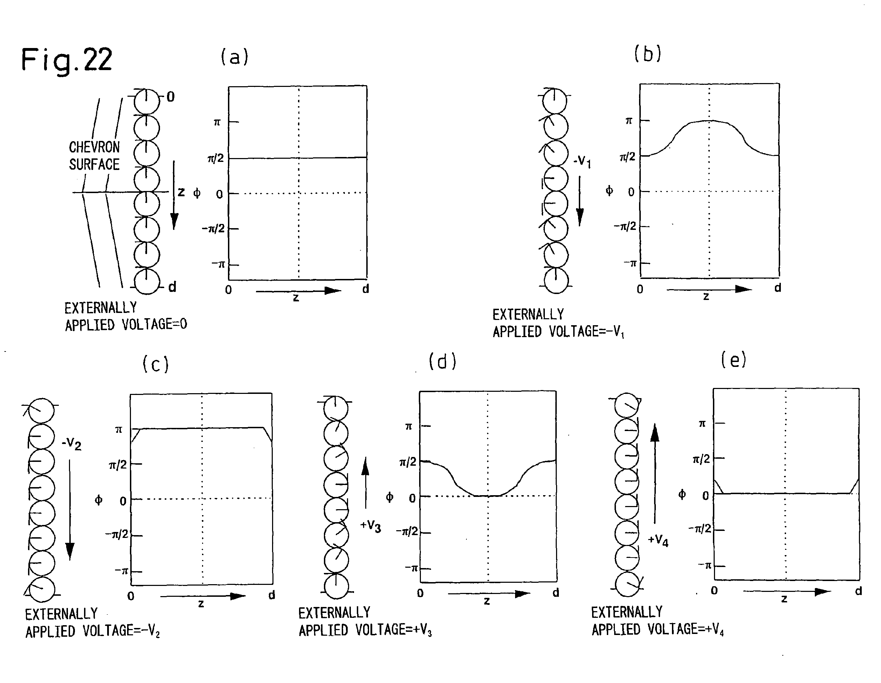

# Fig.22

(a)

CHEVRON
SURFACE

$z$ $\phi$

EXTERNALLY
APPLIED VOLTAGE=0

(b)

$-V_1$

EXTERNALLY
APPLIED VOLTAGE=$-V_1$

(c)

$-V_2$

EXTERNALLY
APPLIED VOLTAGE=$-V_2$

(d)

$+V_3$

EXTERNALLY
APPLIED VOLTAGE=$+V_3$

(e)

$+V_4$

EXTERNALLY
APPLIED VOLTAGE=$+V_4$

EP 2 124 092 A1

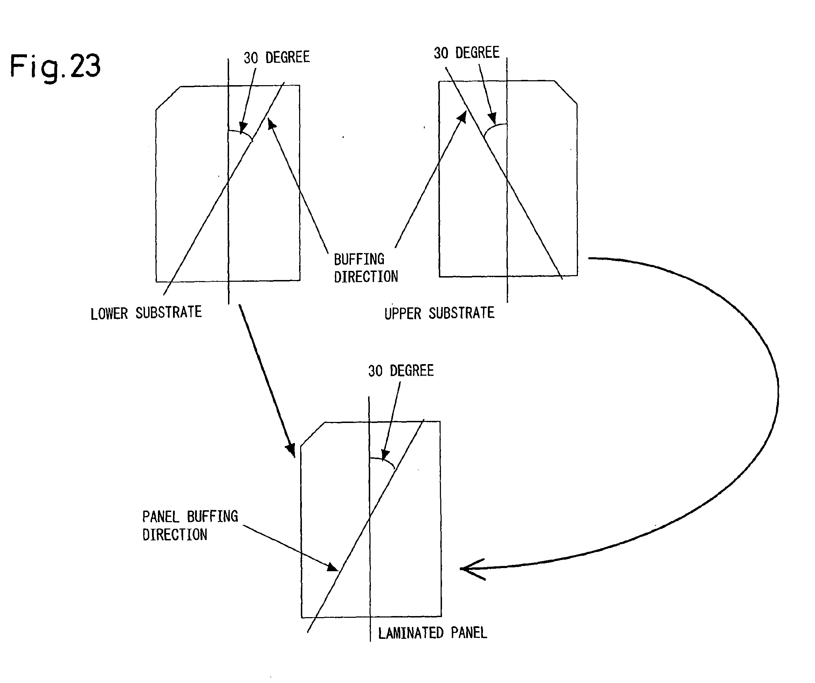

# Fig.23

30 DEGREE

30 DEGREE

BUFFING
DIRECTION

LOWER SUBSTRATE

UPPER SUBSTRATE

30 DEGREE

PANEL BUFFING
DIRECTION

LAMINATED PANEL

EP 2 124 092 A1

# Fig.24

OSCILLOSCOPE

PMT

ANALYZER

PSS-LCD CELL

POLARIZER

BACK LIGHT

FUNCTION GENERATOR

EP 2 124 092 A1

# Fig.25

LEAD WIRE

TRANSPARENT
ELECTRODE

BUFFING DIRECTION

SEALER

GLASS PLATE

LIQUID CRYSTAL
INJECTION PORT

# Fig.26

# Fig.27

<div align="center">

**INTERNATIONAL SEARCH REPORT**

</div>

| International application No. |
| --- |
| PCT/JP2008/052384 |

A.  CLASSIFICATION OF SUBJECT MATTER
*G02F1/133(2006.01)i, G02F1/141(2006.01)i*

According to International Patent Classification (IPC) or to both national classification and IPC

B.  FIELDS SEARCHED

Minimum documentation searched (classification system followed by classification symbols)
G02F1/133, G02F1/141

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2005-316460 A  (Toshiba Matsushita Display Technology Co., Ltd.),<br>10 November, 2005 (10.11.05),<br>Claim 1; Par. Nos. [0004] to [0014], [0027] to [0059]; Figs. 1 to 3<br>& US 2006/0007207 A1    & KR 10-2006-0045437 A<br>& CN 1677474 A | 1,3,5,7,8<br>9 |

☒  Further documents are listed in the continuation of Box C.   ☐  See patent family annex.

| | |
| --- | --- |
| *   Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>10 April, 2008 (10.04.08) | Date of mailing of the international search report<br>22 April, 2008 (22.04.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/052384

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2-828 A (Matsushita Electric Industrial Co., Ltd.),<br>05 January, 1990 (05.01.90),<br>Claims; description, page 1, lower right column, line 17 to page 2, upper left column, line 1; page 2, upper left column, line 19 to page 3, upper left column, line 4; page 3, lower left column, line 4 to lower right column, line 7; Fig. 1<br>& US 4989954 A          & EP 311116 A2<br>& DE 3850838 C          & KR 10-1992-0000144 B | 2,4,5,7,8<br>9 |
| X<br>Y | JP 1-271729 A (Matsushita Electric Industrial Co., Ltd.),<br>30 October, 1989 (30.10.89),<br>Claims; description, page 2, upper left column, lines 7 to 9; page 2, upper right column, line 8 to lower right column, line 18; page 3, lower left column, line 13 to lower right column, line 10; Fig. 1<br>& US 4989954 A          & EP 311116 A2<br>& DE 3850838 C          & KR 10-1992-0000144 B | 2,4,5,7,9<br>9 |
| X | JP 62-204229 A (Casio Computer Co., Ltd.),<br>08 September, 1987 (08.09.87),<br>Claims; description, page 3, upper left column, line 13 to upper right column, line 1; Figs. 1 to 3<br>(Family: none) | 2,5-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62204229 A
- JP 4186230 A
- JP 4186224 A

### Non-patent literature cited in the description

- **Phil Bos ; K.R. Kehler-Beran.** $\pi$-*Cell: Molecular Crystals and Liquid Crystals,* 1984, vol. 113, 329